Europäisches Patentamt

European Patent Office

Office européen des brevets

(11) Veröffentlichungsnummer: **0 548 466 B1**

(12) **EUROPÄISCHE PATENTSCHRIFT**

(45) Veröffentlichungstag der Patentschrift: **12.04.95**

(21) Anmeldenummer: **92114952.2**

(22) Anmeldetag: **02.09.92**

(51) Int. Cl.⁶: **F15B 13/044**, F16K 31/10

(54) **Elektro-magnetische Steuereinrichtung für Ventile.**

(30) Priorität: **23.12.91 DE 4142883**

(43) Veröffentlichungstag der Anmeldung:
**30.06.93 Patentblatt 93/26**

(45) Bekanntmachung des Hinweises auf die
Patenterteilung:
**12.04.95 Patentblatt 95/15**

(84) Benannte Vertragsstaaten:
**DE FR GB IT SE**

(56) Entgegenhaltungen:
EP-A- 0 074 420          DE-A- 2 923 719
FR-A- 866 238            FR-A- 2 067 780
US-A- 2 954 050          US-A- 4 530 487

W.Backe, GRUNDLAGEN DER ÖLHYDRAULIK,
1988, Institut für Hydraulische und Pneumatische Antriebe und Steuerungen der Rheinisch-Westfälischen Technischen Universität Aachen

(73) Patentinhaber: **O&K ORENSTEIN & KOPPEL AG**
**Staakener Strasse 53-63**
**D-13581 Berlin (DE)**

(72) Erfinder: **Pidde, Gernd**
**Lindener Strasse 149a**
**W-4630 Bochum-Linden (DE)**
Erfinder: **Tolksdorf, Detlef**
**Hertzelerstrasse 11**
**W-4300 Dessen 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft eine elektro-magnetische Steuereinrichtung für Ventile, insbesondere für mobile Arbeitsmaschinen, gemäß gattungsbildendem Teil des ersten Patentanspruches.

Elektromagnete zur Verstellung von Ventilkolben werden dem allgemeinen St.d.T. entsprechend in axialer Richtung gegen die Stirnfläche des zu verstellenden Kolbens angeordnet, so daß der Kraftfluß vom Magnetanker direkt auf den Verstellkolben erfolgt. Diese Anordnung erfordert einen geringeren mechanischen Aufwand. Die Verstellkräfte sind hierbei genauso groß wie die vom Elektromagneten. Die Kraft vom Elektromagneten ist im wesentlichen nur durch den elektrischen Strom als abhängige Variable beeinflußbar. Die handelsüblichen Elektromagnete verfügen in der Regel über mehr Ankerhub im linearen Bereich ihrer Kennlinie Kraft (F)/elektrischen Strom (I) als für die Auslenkung des Verstellkolbens ausgenutzt wird.

Die DE-A 29 23 719 zeigt ein gattungsgemäßes magnetbetätigtes 3/2-Wegeventil mit Federrückstellung, insbesondere für den hydraulischen Grubenausbau. Der Ventilkörper des Wegeventils weist hierbei eine Verlängerung auf, wobei auf das Gehäuse des Ventils ein mit Niederspannung eigensicher betriebener Gleichstrommagnet mit einem langhubigen Anker aufgeflanscht ist, der über ein Hebelgetriebe mit der Verlängerung des 3/2-Wegeventils verbunden ist. Eine Schaltverzögerung tritt durch die unmittelbare mechanische Übertragung des Schaltvorganges mittels dieses Hebelgetriebes praktisch nicht auf. Nachteilig ist hier festzustellen, daß infolge der Verwendung eines langhubigen Ankers bei der Krafteinwirkung in dessen ebenfalls lang ausgebildeter Betätigungsstange Verbiegungen auftreten können, die die Führung derselben beeinflussen können. Diese Verbiegung kann sich wiederum nachteilig auf die Kraftübertragung auf den Verstellkolben des Wegeventils auswirken, so daß dessen optimale Funktion ebenfalls in Mitleidenschaft gezogen werden kann.

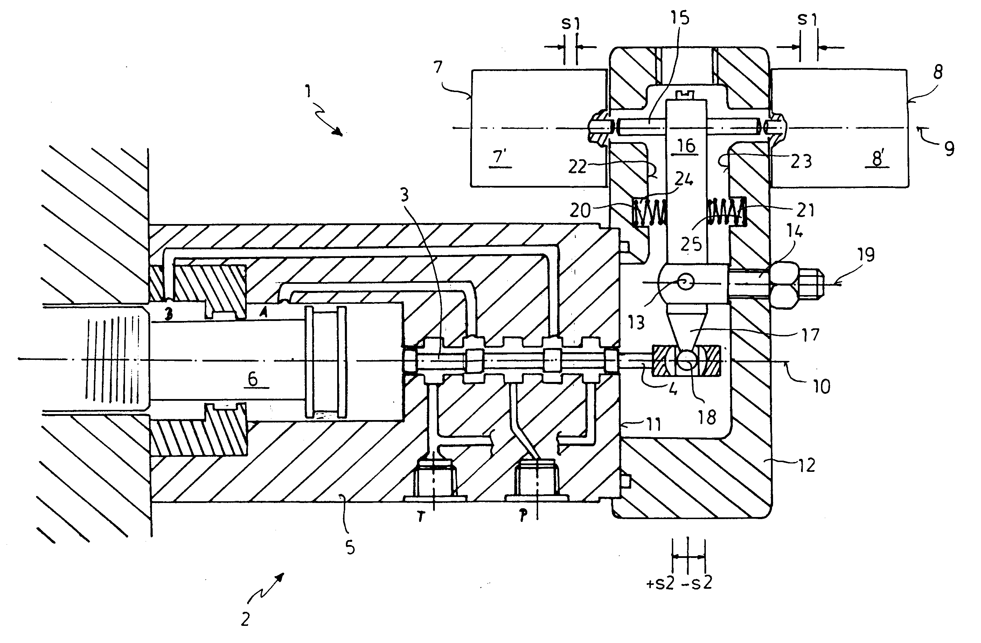

Dem Umdruck zur Vorlesung "Grundlagen der Ölhydraulik" (Prof. Dr. Ing. W. Backe), 7. Auflage, 1988 des Institutes für hydraulische und pneumatische Antriebe und Steuerungen der Rheinisch-Westfälischen Technischen Universität Aachen ist auf Seite 7-7 ein Kapitel zum Thema Proportionalwegeventile zu entnehmen. In Bild 7.5 ist ein einstufiges Proportionalwegeventil mit Lageregelung dargestellt, wobei zwei Proportionalmagneten vorgesehen sind, die direkt auf den Steuerschieber einwirken und die Mitteillinien der Betätigungsstangen der Proportionalmagnete identisch mit der Mittellinie des Verstellkolbens des Steuerschiebers sind, d.h. daß eine in Reihe geschaltete Bauweise vorgesehen ist, die keiner Hebelgetriebe, wie sie in der DE-A 29 23 719 angesprochen wurden, bedarf. Nachteil bei dieser Version ist die notwendige Baulänge der gesamten Einheit (Steuerventil mit zwei seitlich angeordneten Proportionalventilen), die insbesondere bei den engen Bauverhältnissen in mobilen Arbeitsmaschinen zu Schwierigkeiten führt. Ohne erhebliche konstruktive Veränderungen vornehmen zu müssen, würde eine Bauform, wie sie die DE-A 29 23 719 vorgibt, übertragen auf die Bauform dieses Dokumentes nicht unbedingt zu einer Reduzierung der Baulänge führen, zumal die Proportionalventile beiderseits des Steuerblocks vorgesehen sind.

Ziel des Erfindungsgegenstandes ist es, neben einer Reduzierung des Bauaufwandes die Steuereinrichtung dahingehend weiterzubilden, daß der Hub des Magnetankers besser ausgenutzt werden kann und die sich durch niedrigen elektrischen Stromverbrauch bei gleichen Verstellkräften auszeichnet, und deswegen insbesondere für mobile Arbeitsmaschinen mit begrenzter verfügbarer Leistung geeignet sein soll.

Dieses Ziel wird mit den Maßgaben im kennzeichnenden Teil des ersten Patentanspruches erreicht.

Vorteilhafte Weiterbildungen des Erfindungsgegenstandes sind den Unteransprüchen zu entnehmen.

Da die Magnetkraft $F_M$ direkt proportional zum elektrischen Strom ist, wird der elektrische Stromverbrauch um das Verhältnis $I_2/I_1$ reduziert, wobei $I_2$ der Hebelarm zwischen Verstellkolben und Drehpunkt und $I_1$ der Hebelarm zwischen Magnetanker und Drehpunkt ist.

Als Ergebnis wird mit dieser Steuereinrichtung eine elektro-magnetische Verstellung für Ventile erreicht, bei welcher der Hub des jeweiligen Magnetankers besser ausgenutzt werden kann und welche insbesondere dort Anwendung finden kann, wo lediglich begrenzte elektrische Leistungen zum Ansteuern von Ventilen verfügbar sind und demzufolge der geringfügig erhöhte mechanische Mehraufwand gerechtfertigt erscheint.

Der Erfindungsgegenstand ist anhand eines Ausführungsbeispieles in der Zeichnung dargestellt und wird wie folgt beschrieben.

Die einzige Figur zeigt eine elektro-proportionale Steuereinrichtung 1 für ein Ventil 2, das beispielsweise an einer Baumaschine (Radlader, Bagger, Grader oder dgl.) Anwendung finden kann. Beim allgemeinen St.d.T. sind die Steuereinrichtungen in der Regel in Achslängsrichtung des Verstellkolbens 3 vorgesehen und wirken unmittelbar auf diesen ein. Der Verstellkolben 3, der einen verlängerten Bereich 4 aufweist, ist innerhalb eines Ventilgehäuses 5 geführt und steuert in diesem Beispiel einen Hauptkolben 6 hydraulisch an. Die Steuereinrichtung 1 wird in diesem Beispiel durch zwei lediglich angedeutete am Ventilgehäuse 5 befestigte Elektromagnete 7,8 samt Magnetankern 7',8' gebildet, die mit vorgegebenem seitlichem Abstand zum Ventilgehäuse 5 vorgesehen sind. Die Mittellinie 9 der Elektromagnete 7,8 verläuft in diesem Beispiel im wesentlichen parallel zur Mittellinie 10 des Verstellkolbens 3 bzw. des Hauptkolbens 6. Andere Anordnungen sind jedoch ebenfalls denkbar. Das Ventilgehäuse 5 ist im Bereich seines freien Endes 11 mit einem Gehäuse 12 verbunden, innerhalb dessen ein fester Drehpunkt 13 vorgesehen ist, der über Verbindungselemente 14 mit dem Gehäuse 12 zusammenwirkt. Zwischen der gemeinsamen Stange 15, der Elektromagnete 7,8 und dem Drehpunkt 13 ist ein erster Hebelarm 16 mit einer Länge $l_1$ vorgesehen. Zwischen dem Drehpunkt 13 und dem verlängerten Bereich 4 des Verstellkolbens 3 ist ein weiterer Hebelarm 17 mit einer Länge $l_2$ angeordnet. Im Bereich des freien Endes des Hebelarmes 17 ist ein Gelenk 18 vorgesehen, um einen zwängungsfreien Betrieb bei Auslenkung der Stange 15 zu gewährleisten. In der Nullstellung, d.h. in der nicht ausgelenkten Stellung der Stange 15 stehen die Hebelarme 16,17 senkrecht auf der durch den Drehpunkt 13 gehenden Mittellinie 19. Im Bereich des Hebelarms 15 sind Federelemente 20,21 vorgesehen, die im Kräftegleichgewicht mit den Elektromagneten 7,8 stehen und bei Betätigen des einen oder anderen Elektromagneten 7 bzw. 8 verhindern, daß unmittelbar ein bis zu 100 % gehender Ausschlag des Verstellkolbens 3 und damit des Hauptkolbens 6 herbeigeführt wird. Die Federelemente 20,21 erstrecken sich hierbei in Richtung der korrespondierenden Innenwandungen 22,23 des Gehäuses 12, wo sie in entsprechenden Ausnehmungen 24,25 geführt sind.

Aufgrund dieser Anordnung ergibt sich die Momentengleichung:

$F_M \times l_1 = F_K \times l_2$, worin $F_M = F_K \times l_2/l_1$. Daraus folgt $F_M = F_K \times S_2/S_1$.

$F_M$ = Magnetkraft
$F_K$ = Kolbenkraft
$l_1$ = Hebelarm Magnetanker - Drehpunkt
$l_2$ = Hebelarm Verstellkolben - Drehpunkt
$S_1$ = Weg der Magnetanker
$S_2$ = Weg des Kolbens

Für $l_2$ kleiner $l_1$ wird folglich $F_M$ kleiner bei konstanter Verstellkraft $F_K$ am Verstellkolben. Da die Magnetkraft $F_M$ direkt proportional zum elektrischen Strom ist, wird der elektrische Stromverbrauch um das Verhältnis $l_2 : l_1$ reduziert.

Infolge der vorstehend genannten Parameter ist bei Auslenkung der Magnetanker 7',8' um den Betrag $S_1$ eine proportionale Auslenkung des Verstellkolbens 3 um den Betrag $S_2$ gewährleistet. Auch wenn hier ein geringfügig erhöhter mechanischer Aufwand vorgenommen wird, so sind die durch diese Maßnahme erreichten Vorteile, wie z.B. optimale Ausnutzung des Ankerhubes im linearen Bereich der Magnetanker 7',8' in Verbindung mit der Reduzierung des elektrischen Stromverbrauches, dennoch geeignet, für mobile Arbeitsmaschinen mit begrenzter verfügbarer elektrischer Leistung vorteilhaft eingesetzt zu werden.

**Patentansprüche**

1. Elektro-magnetische Steuereinrichtung für Ventile, insbesondere für mobile Arbeitsmaschinen, mit einem Ventilgehäuse (5), das mindestens einen Verstellkolben (3) beinhaltet und das mit mindestens einem einen Magnetanker (7',8') aufweisenden Elektromagneten (7,8) zusammenwirkt, wobei

   - der Elektromagnet (7,8) bzw. der Magnetanker (7',8') mit seitlichem Abstand neben dem Verstellkolben (3) bzw. dem Ventilgehäuse (5) vorgesehen ist und die Mittellinien (9,10) des Verstellkolbens (3) und der Stange (15) des Elektromagneten (7,8) im wesentlichen parallel zueinander verlaufen,

   - der Magnetanker (7',8') mit dem Verstellkolben (3) über einen im Bereich eines in einem weiteren Gehäuse (12) vorgesehenen Drehpunktes (13) gelagerten Hebels mit unterschiedlich langen Hebelarmen (16,17) verbunden ist und

   - der längere Hebelarm (16) des Hebels im Bereich der Stange (15) des Elektromagneten (7,8) vorgesehen ist,

   dadurch gekennzeichnet, daß

   - zwei Elektromagnete (7,8) samt zugehörigen Magnetankern (7',8') und gemeinsamer Stange (15) seitlich neben dem Verstellkolben (3) bzw. dem Ventilgehäuse (5) vorgesehen sind, wobei das gemeinsame bzw. die einzelnen Gehäuse der Elektromagnete (7,8) fest mit dem Ventilgehäuse (5) verbunden sind,

   - zumindest eines der freien Enden der Hebelarme (16,17) gegenüber den Elektromagneten (7,8) bzw. dem Verstellkolben (3) gelenkig (18) gelagert ist und

   - im Bereich eines der Hebelarme (16,17) Federelemente (20,21) vorgesehen sind, die im Kräftegleichgewicht mit den Elektromagneten (7,8) stehen.

2. Steuereinrichtung nach Anspruch 1, dadurch gekennzeichnet, daß die Hebelarme (16,17) in ihrer nicht ausgelenkten Stellung im wesentlichen senkrecht auf der durch den Drehpunkt (13) verlaufenden Mittellinie (19) vorgesehen sind.

3. Steuereinrichtung nach den Ansprüchen 1 und 2, dadurch gekennzeichnet, daß der Drehpunkt (13) an einer axialen Verlängerung (14) des Gehäuses (12) angeordnet ist.

4. Steuereinrichtung nach den Ansprüchen 1 bis 3, dadurch gekennzeichnet, daß die Federelemente (20,21) im Bereich des längeren Hebelarmes (16), sich in Richtung der Innenwandungen (22,23) des Gehäuses (12) erstreckend, angeordnet sind.

5. Steuereinrichtung nach den Ansprüchen 1 bis 4, die folgender Momentengleichung genügt:

$$F_M = F_K \times l_2/l_1$$

worin
$F_M$ = Magnetkraft
$F_K$ = Kolbenkraft
$l_1$ = Hebelarm Magnetanker - Drehpunkt
$l_2$ = Hebelarm Verstellkolben - Drehpunkt
sind.

## Claims

1. Electromagnetic control device for valves, especially for mobile construction machines, with a valve housing (5) which contains at least one adjusting piston (3) and which co-operates with at least one electromagnet (7,8) having a magnet armature (7', 8'), wherein
   - the electromagnet (7, 8) or the magnet armature (7', 8') is provided near, and at a lateral distance from, the adjusting piston (3) or the valve housing (5), and the centre lines (9, 10) of the adjusting piston (3) and of the rod (15) of the electromagnet (7, 8) extend substantially parallel to one another,
   - the magnet armature (7', 8') is connected to the adjusting piston (3) by way of a lever with lever arms (16, 17) of different lengths which is mounted in the region of a fulcrum (13) provided in a further housing (12), and
   - the longer lever arm (16) of the lever is provided in the region of the rod (15) of the electromagnet (7, 8),
   characterised in that
   - two electromagnets (7, 8) together with the corresponding magnet armatures (7', 8') and a common rod (15) are provided laterally near the adjusting piston (3) or the valve housing (5), the common or the individual housing(s) of the electromagnets (7, 8) being rigidly connected to the valve housing (5),

- at least one of the free ends of the lever arms (16, 17) is articulated (18) with respect to the electromagnets (7, 8) or the adjusting piston (3), and
- in the region of one of the lever arms (16, 17) spring elements (20, 21) are provided which are in a force equilibrium with the electromagnets (7, 8).

2. Control device according to Claim 1, characterised in that the lever arms (16, 17) in their undeflected position are arranged substantially perpendicular to the centre line (19) extending through the fulcrum (13).

3. Control device according to Claims 1 and 2, characterised in that the fulcrum (13) is arranged on an axial extension (14) of the housing (12).

4. Control device according to Claims 1 to 3, characterised in that the spring elements (20, 21) are arranged in the region of the longer lever arm (16) and extend in the direction of the inner walls (22, 23) of the housing (12).

5. Control device according to Claims 1 to 4, which complies with the following moment equation:

$$F_M = F_K \times l_2/l_1$$

wherein
$F_M$ = magnet force
$F_K$ = piston force
$l_1$ = lever arm magnet armature - fulcrum
$l_2$ = lever arm adjusting piston - fulcrum.

## Revendications

1. Dispositif de commande électromagnétique pour des vannes de distribution, notamment pour des machines de travail mobiles, avec un boîtier de distributeur (5) qui contient au moins un piston mobile (3) et qui coopère avec au moins un électro-aimant (7, 8) présentant un induit (7', 8'),
   - l'électro-aimant (7, 8) ou encore l'induit (7', 8') étant prévu à distance latérale à côté du piston mobile (3) ou encore du boîtier de distributeur (5), et les axes médians (9, 10) du piston mobile (3) et de la barre (15) de l'électro-aimant (7, 8) s'étendant sensiblement parallèlement entre eux,
   - l'induit (7', 8') étant relié au piston mobile (3) par l'intermédiaire d'un levier qui est monté dans la région d'un pivot (13) prévu dans un boîtier supplémentaire (12) et qui présente des bras de lever (16, 17) de longueurs différentes, et

- le plus long bras de lever (16) du levier étant prévu dans la région de la barre (15) de l'électro-aimant (7, 8),

caractérisé en ce que

- deux électro-aimants (7, 8), avec des induits associés (7', 8') et une barre commune (15), sont prévus latéralement à côté du piston mobile (3) ou encore du boîtier de distributeur (5), le boîtier commun ou, selon le cas, les boîtiers individuels des électro-aimants (7, 8) étant rigidement assemblés au boîtier de distributeur (5),
- au moins une des extrémités libres des bras de lever (16, 17) est montée en articulation (18) par rapport aux électro-aimants (7, 8) ou, selon le cas, au piston mobile (3), et
- des éléments de ressort (20, 21) sont prévus dans la région d'un des bras de levier (16, 17), éléments qui sont en équilibre de forces avec les électro-aimants (7, 8).

2. Dispositif de commande selon la revendication 1, caractérisé en ce que les bras de levier (16, 17) sont prévus, dans leur position non déviée, sensiblement perpendiculairement sur l'axe médian (19) passant par le pivot (13).

3. Dispositif de commande selon la revendication 1 ou 2, caractérisé en ce que le pivot (13) est disposé sur un prolongement axial (14) du boîtier (12).

4. Dispositif de commande selon l'une des revendications 1 à 3, caractérisé en ce que les éléments de ressort (20, 21) sont disposés dans la région du plus long bras de levier (16), en s'étendant en direction des parois intérieures (22, 23) du boîtier (12).

5. Dispositif de commande selon l'une des revendications 1 à 4, qui satisfait à l'équation de moments suivante :

$$F_M = F_K \times l_2/l_1$$

où
$F_M$ = force magnétique
$F_K$ = force du piston
$l_1$ = bras de lever induit - pivot
$l_2$ = bras de lever piston mobile - pivot.